# EUROPEAN PATENT APPLICATION

(11) **EP 4 411 755 A1**
(43) Date of publication of application: **07.08.2024**
(21) Application number: 21959501.4
(22) Date of filing: 08.12.2021
(51) Int. Cl.: H01B 1/06, H01B 1/10

(54) **SULFIDE-BASED SOLID ELECTROLYTE AND PRODUCTION METHOD FOR SAME, SOLID ELECTROLYTE LAYER, AND LITHIUM-ION SECONDARY BATTERY**

(30) Priority: 30.09.2021 JP 2021162229
(71) Applicant: AGC INC., Chiyoda-ku, Tokyo 1008405 (JP)
(72) Inventor: ANDO, Ryota, Tokyo 100-8405 (JP); FUJII, Naoki, Tokyo 100-8405 (JP)
(74) Representative: Müller-Boré & Partner Patentanwälte PartG mbB
(86) International application number: PCT/JP2021/045220
(87) International publication number: WO 2023/053467

(57) **Abstract**

The present invention relates to a sulfide-based solid electrolyte that has an ignition time of 5 or more seconds, or does not ignite, when an ignition test is performed using a prescribed test method in a dry air environment.

## Description

### TECHNICAL FIELD

The present invention relates to a sulfide solid electrolyte, a method for producing the same, a solid electrolyte layer, and a lithium-ion secondary battery.

### BACKGROUND ART

Lithium-ion secondary batteries are widely used in portable electronic devices such as mobile phones and laptop computers. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide solid electrolyte. For example, Patent Literature 1 discloses a sulfide solid electrolyte having an argyrodite crystal structure. The sulfide solid electrolyte disclosed in Patent Literature 1 includes a compound which has a cubic crystal structure belonging to a space group F-43m, and is represented by a compositional formula: Li₇₋ₓPS_{6-X}Ha_{X} (in which Ha represents Cl or Br) (in which x = 0.2 to 1.8), and a lightness L value in an L* a* b* color system is 60.0 or more. This is intended to improve the charge and discharge efficiency and the cycle characteristics by increasing the lithium ion conductivity and decreasing the electron conductivity.

### CITATION LIST

### PATENT LITERATURE

Patent Literature 1: WO2015/012042

### SUMMARY OF INVENTION

### TECHNICAL PROBLEM

However, the sulfide solid electrolyte tends to catch fire in the case where there is an ignition source in an environment where oxygen coexists. Therefore, for example, in the state where the lithium-ion secondary battery is broken and the sulfide solid electrolyte is placed in an air atmosphere, when the ignition source approaches, the sulfide solid electrolyte may be ignited and spread flames. Further, in a process of producing the sulfide solid electrolyte or the lithium-ion secondary battery using the same, for example, even if the sulfide solid electrolyte is placed in a dry air atmosphere, when the ignition source approaches the sulfide solid electrolyte, the sulfide solid electrolyte may be ignited and spread flames.

Furthermore, when the sulfide solid electrolyte is ignited, the sulfide solid electrolyte not only spreads the flames, but also poses the danger of generating a toxic SO₂ gas or a toxic H₂S gas. Under such circumstances, a sulfide solid electrolyte that is difficult to ignite when the ignition source approaches is required.

In view of the above circumstances, an object of the present invention is to provide a more safe sulfide solid electrolyte that is less likely to ignite and a method for producing the same.

### SOLUTION TO PROBLEM

As a result of intensive studies, the present inventors have found that when a large amount of sulfur (S) is present on a surface of the sulfide solid electrolyte, the ignition is likely to occur. Specifically, it is found that an S-S bond present on the surface of the sulfide solid electrolyte cause the ignition. The S-S bond is derived from an elemental sulfur component, but it has been found that, depending on a composition, a crystal structure, and the like of the sulfide solid electrolyte, even when a structure of sulfur on the surface is S²⁻, the S-S bond is formed by heating when the ignition source approaches, resulting in easy ignition.

Therefore, the present inventors have found that by being deficient in the S-S bond or S²⁻ on the surface of the sulfide solid electrolyte, the sulfide solid electrolyte becomes difficult to ignite, thereby providing a sulfide solid electrolyte having excellent safety, and have completed the present invention.

That is, the present invention relates to the following (1) to (14).
(1) A sulfide solid electrolyte that has an ignition time of 5 seconds or more or is non-ignitable when an ignition test is performed using the following test method in a dry air atmosphere,
   (test method)
   the following 1 to 7 are performed at a test location where a temperature is 20°C ± 5°C, a dew point is -30°C, under atmospheric pressure, and a wind speed is 0.05 m/s or less when the wind speed is measured with a hot wire anemometer,
   1. a sulfide solid electrolyte of about 3 cm³ is placed on an inorganic heat-insulating plate having a thickness of 10 mm or more,
   2. a length of a diffusion flame of a gas burner is adjusted to 70 mm in a state in which the diffusion flame faces upward,
   3. the flame and the sulfide solid electrolyte are brought into contact such that a contact area is 1 cm² to 2 cm² and a contact angle is about 30°,
   4. the flame is removed 10 seconds after the flame is brought into contact with the sulfide solid electrolyte,
   5. a time from when the flame is brought into contact with the sulfide solid electrolyte until the sulfide solid electrolyte ignites is measured, and whether the sulfide solid electrolyte continues to burn is observed, and a case in which no ignition occurs after 10 seconds of the contact is evaluated as a non-ignition,
   6. 1 to 5 are repeated five times, and
   7. among measured times until the ignition occurs when the sulfide solid electrolyte continues to burn, a shortest time is defined as an ignition time.
(2) The sulfide solid electrolyte according to the (1), having a value of S₅ₙₘ/S₁₀₀ₙₘ of 0.6 or less when S₅ₙₘ is an elemental ratio of sulfur (S) at a depth of 5 nm from a surface and S₁₀₀ₙₘ is an elemental ratio of sulfur (S) at a depth of 100 nm from the surface, as measured by X-ray photoelectron spectroscopy.
(3) A sulfide solid electrolyte including:
   Li, P and S, in which
   the sulfide solid electrolyte has a value of S₅ₙₘ/S₁₀₀ₙₘ of 0.6 or less when S₅ₙₘ is an elemental ratio of sulfur (S) at a depth of 5 nm from a surface and S₁₀₀ₙₘ is an elemental ratio of sulfur (S) at a depth of 100 nm from the surface, as measured by X-ray photoelectron spectroscopy.
(4) The sulfide solid electrolyte according to any one of the (1) to the (3), including:
   Li, P, S, and Ha, in which
   the Ha is at least one element selected from halogen elements.
(5) The sulfide solid electrolyte according to the (4), having a value of Ha₅ₙₘ/Ha₁₀₀ₙₘ of greater than 0.9 when Ha₅ₙₘ is an elemental ratio of the Ha at the depth of 5 nm from the surface and Ha₁₀₀ₙₘ is an elemental ratio of the Ha at the depth of 100 nm from the surface, as measured by the X-ray photoelectron spectroscopy.
(6) The sulfide solid electrolyte according to any one of the (1) to the (5), having a specific surface area is 3 m²/g or more.
(7) The sulfide solid electrolyte according to any one of the (1) to the (6), further including:
   a crystal phase.
(8) The sulfide solid electrolyte according to any one of the (1) to the (7), further including:
   an argyrodite crystal.
(9) A method for producing the sulfide solid electrolyte according to any one of the (1) to the (8), the method including:
   exposing a surface of the sulfide solid electrolyte to an organic solvent in which S is soluble.
(10) The method for producing the sulfide solid electrolyte according to the (9), in which
   the organic solvent has a polar ratio of 0.1 to 4.0.
(11) A method for producing the sulfide solid electrolyte according to any one of the (1) to the (8), the method including:
   oxidizing a surface of the sulfide solid electrolyte.
(12) A method for producing the sulfide solid electrolyte according to any one of the (1) to the (8), the method including:
   exposing a surface of the sulfide solid electrolyte to moisture.
(13) A solid electrolyte layer including:
   the sulfide solid electrolyte according to any one of the (1) to the (8).
(14) A lithium-ion secondary battery including:
   the sulfide solid electrolyte according to any one of the (1) to the (8).

### ADVANTAGEOUS EFFECTS OF INVENTION

According to the present invention, it is possible to provide a sulfide solid electrolyte having excellent safety since the sulfide solid electrolyte is difficult to ignite, and a method for producing the sulfide solid electrolyte.

### DESCRIPTION OF EMBODIMENTS

Hereinafter, the present invention will be described in detail, but the present invention is not limited to the following embodiment, and can be freely modified and implemented without departing from the gist of the present invention. In addition, the symbol "-" or the word "to" that is used to express a numerical range includes the numerical values before and after the symbol or the word as the upper limit value and the lower limit value of the range, respectively.

### (Sulfide Solid Electrolyte)

In the sulfide solid electrolyte according to an embodiment of the present invention (hereinafter, also referred to as the present solid electrolyte), a type and a composition of the sulfide solid electrolyte are not particularly limited, and may be appropriately selected depending on applications, desired physical properties, and the like. Examples of the sulfide solid electrolyte include a sulfide solid electrolyte including Li, P, and S, and a sulfide solid electrolyte including Li, P, S, and Ha. Here, the Ha represents at least one element selected from halogen elements. Specifically, the Ha is, for example, at least one element selected from the group consisting of F, Cl, Br, and I. In order to obtain an argyrodite crystal structure, the Ha more preferably includes at least one of Cl and Br, still more preferably includes Cl, and yet still more preferably elemental Cl or a mixture of Cl and Br.

Depending on the purpose, the sulfide solid electrolyte may be an amorphous sulfide solid electrolyte, a sulfide solid electrolyte having a specific crystal structure, or a sulfide solid electrolyte including a crystal phase and an amorphous phase.

The sulfide solid electrolyte preferably includes a crystal phase from the viewpoint of improving lithium ion conductivity. In the case where the sulfide solid electrolyte includes the crystal phase, a crystal included in the sulfide solid electrolyte is preferably an ion-conductive crystal. Specifically, the ion-conductive crystal is a crystal having a lithium ion conductivity of preferably more than 10⁻⁴ S/cm, and more preferably more than 10⁻³ S/cm.

When the sulfide solid electrolyte includes the crystal phase, a content thereof is preferably 10 mass% or more, more preferably 30 mass% or more, and still more preferably 50 mass% or more, with respect to the sulfide solid electrolyte. An upper limit of the content of the crystal phase is not particularly limited and may be 100 mass%, but is generally 99 mass% or less.

More specifically, examples of the sulfide solid electrolyte include a sulfide solid electrolyte including an LGPS crystal such as Li₁₀GeP₂S₁₂, a sulfide solid electrolyte including an argyrodite crystal such as Li₆PS₅Cl, Li_{5.4}PS_{4.4}Cl_{1.6}, and Li_{5.4}PS_{4.4}Cl_{0.8}Br_{0.8}, Li-P-S-Ha-based crystallized glass, and LPS crystallized glass such as Li₇P₃S₁₁. The sulfide solid electrolyte may be a combination of these, or may include a plurality of types of crystals having different compositions or crystal structures. From the viewpoint of excellent lithium ion conductivity, a sulfide solid electrolyte including an argyrodite crystal is preferable as the sulfide solid electrolyte.

When the sulfide solid electrolyte includes the argyrodite crystal, a content thereof is preferably 10 mass% or more, more preferably 30 mass% or more, and still more preferably 50 mass% or more, with respect to the sulfide solid electrolyte. An upper limit of the content of the argyrodite crystal is not particularly limited and may be 100 mass%, but is generally 99 mass% or less. The argyrodite crystal may include only one kind of crystal having the same composition or two or more kinds of crystals having different compositions.

In order to obtain the argyrodite crystal structure, the crystal phase includes the Ha in addition to Li, P, and S. The Ha more preferably includes at least one of Cl and Br, still more preferably includes Cl, and is yet still more preferably elemental Cl or the mixture of Cl and Br.

The argyrodite crystal can be defined as including Li, P, S, and the Ha, and having peaks at positions of 2θ = 15.7 ± 0.5° and 30.2 ± 0.5° in an X-ray powder diffraction (XRD) pattern. In addition to the above peaks, the XRD pattern preferably has a peak at a position of 2θ = 18.0 ± 0.5°, and more preferably further has a peak at a position of 2θ = 25.7 ± 0.5°.

The argyrodite crystal preferably satisfies relationships of 5 < a < 7, 4 < b < 6 and 0 < c < 2 when expressed as LiₐPS_{b}Ha_{c} since a crystal tends to become an argyrodite crystal. Such element ratios more preferably satisfy relationships of 5.1 < a < 6.3, 4 < b < 5.3, and 0.7 < c < 1.9, and still more preferably satisfy relationships of 5.2 < a < 6.2, 4.1 < b < 5.2, and 0.8 < c < 1.8.

That is, regarding a, 5 < a < 7 is preferable, 5.1 < a < 6.3 is more preferable, and 5.2 < a < 6.2 is still more preferable. Regarding b, 4 < b < 6 is preferable, 4 < b < 5.3 is more preferable, and 4.1 < b < 5.2 is still more preferable. Regarding c, 0 < c < 2 is preferable, 0.7 < c < 1.9 is more preferable, and 0.8 < c < 1.8 is still more preferable. In this specification, the "element ratio" means a ratio of contents (at%) of elements.

In the case of the argyrodite crystal, a preferable crystal structure is, for example, a cubic crystal such as F-43m, and a hexagonal crystal, a tetragonal crystal, an orthorhombic crystal, a monoclinic crystal, or the like having reduced symmetry or a triclinic crystal or the like having further reduced symmetry may exist.

When the Ha constituting the argyrodite crystal includes Cl and Br, a ratio represented by (x/y) is preferably 0.1 or more, more preferably 0.3 or more, and still more preferably 0.5 or more, in which x (at%) is a content of Cl and y (at%) is a content of Br in the argyrodite crystal. Further, the ratio represented by (x/y) is preferably 10 or less, more preferably 3 or less, and still more preferably 1.6 or less.

When the ratio represented by (x/y) satisfies the above range, an interaction between lithium ions and halide ions is weakened, and the lithium ion conductivity of the sulfide solid electrolyte is likely to be satisfactory. This is considered to be due to the influence of a mixed anion effect, which weakens an interaction between cations and anions by mixing bromide ions having an ionic radius larger than that of chloride ions. When the ratio represented by (x/y) satisfies the above range, cycle characteristics of the lithium-ion secondary battery are likely to be improved.

In the case where the Ha includes Cl and Br, when a ratio of the contents (at%) of elements constituting the argyrodite crystal is expressed by Liₐ-P-S_{b}-Cl_{c1}-Br_{c2}, c1 is preferably 0.1 or more, more preferably 0.3 or more, and still more preferably 0.5 or more. Preferably, c1 is 1.5 or less, more preferably 1.4 or less, and still more preferably 1.3 or less. Preferably, c2 is 0.1 or more, more preferably 0.3 or more, and still more preferably 0.5 or more. Preferably, c2 is 1.9 or less, more preferably 1.6 or less, and still more preferably 1.4 or less.

When c1 and c2 each satisfy the above ranges, a stable argyrodite crystal can be obtained while an abundance proportion of halide ions in the crystal is optimized and the interaction between the anions and the lithium ions in the crystal is reduced. Accordingly, the lithium ion conductivity of the solid electrolyte is likely to be satisfactory. When c1 and c2 each satisfy the above ranges, the cycle characteristics of the lithium-ion secondary battery are likely to be improved.

Here, a, b, and (c1 + c2) preferably satisfy the same relationships as the above-described a, b, and c.

A crystallite size of the crystal constituting the crystal phase is preferably small from the viewpoint of obtaining good lithium ion conductivity when forming a battery. Specifically, the crystallite size is preferably 1,000 nm or less, more preferably 500 nm or less, and still more preferably 250 nm or less. A lower limit of the crystallite size is not particularly limited, and the crystallite size is generally 5 nm or more.

The crystallite size can be calculated by using a half-width of a peak in the XRD pattern and a Scherrer equation.

The composition of the sulfide solid electrolyte is determined by a composition analysis using ICP emission spectrometry, atomic absorption, ion chromatography, or the like. A type of the crystal included in the sulfide solid electrolyte can be analyzed from an X-ray powder diffraction (XRD) pattern. A proportion of the crystal phase in the sulfide solid electrolyte, a content of each crystal, and the like can be analyzed by refining the crystal structure by a Rietveld method using a result of the composition analysis and the X-ray powder diffraction (XRD) pattern.

The present solid electrolyte has an ignition time of 5 seconds or more or is "non-ignitable" when an ignition test is performed using the following test method in a dry air atmosphere.

### (test method)

The following 1 to 7 are performed at a test location with a temperature of 20 ± 5°C and a dew point of -30°C in a nearly windless state under atmospheric pressure.
1. a sulfide solid electrolyte of about 3 cm³ is placed on an inorganic heat-insulating plate having a thickness of 10 mm or more,
2. a length of a diffusion flame of a gas burner is adjusted to 70 mm in a state in which the diffusion flame faces upward,
3. the flame and the sulfide solid electrolyte are brought into contact such that a contact area is 1 cm² to 2 cm² and a contact angle is about 30°,
4. the flame is removed 10 seconds after the flame is brought into contact with the sulfide solid electrolyte,
5. a time from when the flame is brought into contact with the sulfide solid electrolyte until the sulfide solid electrolyte ignites is measured, and whether the sulfide solid electrolyte continues to burn is observed, and a case in which no ignition occurs after 10 seconds of the contact is evaluated as a "non-ignition."
6. 1 to 5 are repeated five times, and
7. among measured times until the ignition occurs when the sulfide solid electrolyte continues to burn, a shortest time is defined as an ignition time.

In the ignition test, the test location in a nearly windless state is preferably a location where the wind speed when measured with the hot wire anemometer is 0.05 m/s or less. Further, in the case where the sulfide solid electrolyte is in powder or granular form, in the 1, the sulfide solid electrolyte is deposited in a hemispherical shape. As the inorganic heat-insulating plate, for example, a ceramic fiber board, alumina, quartz glass, or the like can be used.

Since the present solid electrolyte has the ignition time of 5 seconds or more or is non-ignitable in the ignition test, it is difficult to ignite even when an ignition source approaches. Accordingly, the present solid electrolyte is excellent in safety.

As described above, the present inventors have found that when a large amount of sulfur (S) is present on a surface of the sulfide solid electrolyte, the ignition is likely to occur. Specifically, it is found that an S-S bond present on the surface of the sulfide solid electrolyte cause the ignition. The S-S bond is derived from an elemental sulfur component, but it has been found that, depending on a composition, a crystal structure, and the like of the sulfide solid electrolyte, even when a structure of sulfur on the surface is S²⁻, the S-S bond is formed by heating when the ignition source approaches, resulting in easy ignition.

Therefore, the present inventors have found that by being deficient in the S-S bond or S²⁻ on the surface, the sulfide solid electrolyte becomes difficult to ignite, thereby providing the sulfide solid electrolyte having excellent safety. That is, it has been found that by reducing the S-S bond or S²⁻ on the surface of the present solid electrolyte, the ignition time in the ignition test can be set to 5 seconds or more or the present solid electrolyte can be "non-ignitable", thereby improving the safety. Hereinafter, difficulty of igniting the sulfide solid electrolyte is sometimes referred to as "ignition resistance."

A shape of the present solid electrolyte is not particularly limited, but is preferably a powder form from the viewpoint of improving adhesion to active material particles and the like when the present solid electrolyte is used in the lithium-ion secondary battery and improving a battery characteristic. Here, when the present solid electrolyte is in the powder form, the surface of the present solid electrolyte refers to a surface of a sulfide solid electrolyte particle included in the sulfide solid electrolyte powder.

When S₅ₙₘ is an elemental ratio of sulfur (S) at a depth of 5 nm from the surface of the present solid electrolyte, and S₁₀₀ₙₘ is an elemental ratio of sulfur (S) at a depth of 100 nm from the surface, and a value of S₅ₙₘ/S₁₀₀ₙₘ is preferably 0.6 or less. The value of S₅ₙₘ/S₁₀₀ₙₘ being less than 1 means that a sulfur element ratio in the vicinity of the surface of the sulfide solid electrolyte is smaller than a sulfur element ratio in an interior relatively deep from the surface. Further, when the value of S₅ₙₘ/S₁₀₀ₙₘ is 0.6 or less, the ignition resistance of the sulfide solid electrolyte is easily improved, which is preferable. The value of S₅ₙₘ/S₁₀₀ₙₘ is more preferably 0.5 or less, and still more preferably 0.4 or less.

On the other hand, the value of S₅ₙₘ/S₁₀₀ₙₘ is preferably 0.1 or more, more preferably 0.2 or more, and still more preferably 0.3 or more. When the value of S₅ₙₘ/S₁₀₀ₙₘ is equal to or larger than the above value, it is possible to prevent excessive deficient of sulfur on the surface of the sulfide solid electrolyte, and to prevent a decrease in lithium ion conductivity.

Each of S₅ₙₘ and S₁₀₀ₙₘ can be measured by X-ray photoelectron spectroscopy (hereinafter also referred to as XPS). Specifically, each of S₅ₙₘ and S₁₀₀ₙₘ can be measured by performing an XPS analysis by a wide scan analysis on the sulfide solid electrolyte using a photoelectron spectrometer (ESCA 5500, manufactured by ULVAC-PHI, INCORPORATED) using a transfer vessel. Conditions are as follows.

Pass energy: 93.9 eV, step energy: 0.8 eV, analysis area: 800 µm in diameter, detection angle: 45° with respect to sample surface, X-ray source: Al ray, monochrome 14 kV, 300 W, sputtering type: C₆₀ ion, and sputtering rate: 0.74 nm/min (in terms of thermal oxide film SiO₂)

That is, the present solid electrolyte is, for example, a sulfide solid electrolyte including Li, P, and S, in which the value of S₅ₙₘ/S₁₀₀ₙₘ is preferably 0.6 or less when S₅ₙₘ is the elemental ratio of sulfur (S) at the depth of 5 nm from the surface and S₁₀₀ₙₘ is the elemental ratio of sulfur (S) at the depth of 100 nm from the surface, as measured by the X-ray photoelectron spectroscopy.

The present solid electrolyte preferably does not have the S-S bond on the surface thereof. As described above, although S²⁻ also forms the S-S bond due to the heating and is a factor in making the sulfide solid electrolyte more likely to ignite, it is considered that the S-S bond is a more direct cause of the ignition. Therefore, even if the present solid electrolyte has a certain amount of sulfur element on the surface, for example in the form of S²⁻, it is considered that the ignition resistance can be further improved by not having the S-S bond on the surface. The presence or absence of the S-S bond can be measured by Raman spectroscopy or the XPS analysis. An analysis according to the Raman spectroscopy also includes bulk information. Therefore, in order to obtain surface information in more detail and selectively, the XPS analysis is preferable.

When Ha₅ₙₘ is an elemental ratio of the Ha at the depth of 5 nm from the surface of the present solid electrolyte, and Ha₁₀₀ₙₘ is an elemental ratio of the Ha at the depth of 100 nm from the surface, a value of Ha₅ₙₘ/Ha₁₀₀ₙₘ is preferably larger than 0.9. When the surface of the present solid electrolyte is deficient in S, a halogen element ratio in the vicinity of the surface is relatively larger than a halogen element ratio in the interior relatively deep from the surface. Therefore, even in the case where the value of Ha₅ₙₘ/Ha₁₀₀ₙₘ is larger than 0.9, it can be indirectly evaluated that the surface of the present solid electrolyte is deficient in the sulfur element. Further, since the halogen elements are generally flame retardant, it is considered that a relatively large ratio of the halogen element on the surface of the present solid electrolyte itself contributes to improving the ignition resistance. The value of Ha₅ₙₘ/Ha₁₀₀ₙₘ is more preferably 1.0 or more, still more preferably 1.1 or more, and particularly preferably 1.2 or more.

An upper limit of the value of Ha₅ₙₘ/Ha₁₀₀ₙₘ is not particularly limited, and is preferably 1.6 or less, and more preferably 1.4 or less, from the viewpoint of preventing the excessive deficient of sulfur on the surface and preventing the decrease in lithium ion conductivity.

Ha₅ₙₘ and Ha₁₀₀ₙₘ can be measured by XPS in the same manner as S₅ₙₘ and S₁₀₀ₙₘ, respectively. Further, for example, when the value of Ha₅ₙₘ/Ha₁₀₀ₙₘ is larger than 0.9, it can be determined that the Ha in the vicinity of the surface is more by comparing a composition in the vicinity of the surface and a composition of an inside (bulk portion) by an STEM-EDX analysis. A value of the Ha can be compared using signal intensity derived from the Ha element obtained by STEM-EDX.

A specific surface area of the present solid electrolyte can be appropriately adjusted according to the application, desired battery characteristics, and the like. For example, from the viewpoint of improving the battery characteristics when the present solid electrolyte is used for the lithium-ion secondary battery, the specific surface area is preferably 3 m²/g or more, more preferably 5 m²/g or more, and still more preferably 10 m²/g or more. On the other hand, although an upper limit thereof is not particularly limited, the specific surface area is preferably 30 m²/g or less and more preferably 20 m²/g or less, from the viewpoint of well dispersing the powder without aggregation at the time of slurry preparation for battery formation. ABET specific surface area is used as the specific surface area. The BET specific surface area is determined as a surface area per unit weight from the monomolecular layer adsorption amount obtained by applying a BET equation called a BET method using an adsorption isotherm obtained by adsorption and desorption measurement of a gas such as nitrogen.

Similarly to the specific surface area, an average particle diameter of the sulfide solid electrolyte can be appropriately adjusted according to the application, desired battery characteristics, and the like. For example, from the viewpoint of improving the battery characteristics when the present solid electrolyte is used for the lithium-ion secondary battery, the average particle diameter is preferably 5 µm or less, more preferably 2 µm or less, still more preferably 1.5 µm or less, and yet still more preferably 1.0 µm or less. On the other hand, from the viewpoint of ease of handling the powder, the average particle diameter is preferably 0.1 µm or more, more preferably 0.2 µm or more, and still more preferably 0.3 µm or more. In the present specification, the average particle diameter refers to a median diameter (D50) determined from a chart of a volume-based particle size distribution obtained by measuring a particle size distribution using a laser diffraction particle size distribution analyzer MT 3300 EXII manufactured by Microtrac.

In the case where the present solid electrolyte is used for the lithium-ion secondary battery, the present solid electrolyte may form a solid electrolyte layer together with other components such as a binder as necessary. As the binder or other components, known substances according to the related art are used.

A content of the present solid electrolyte relative to the entire solid electrolyte layer is preferably 80 mass% or more, and more preferably 90 mass% or more.

As a method for forming the solid electrolyte layer, a known method according to the related art is also used. For example, the solid electrolyte layer can be formed by dispersing or dissolving the components constituting the solid electrolyte layer in a solvent to form a slurry, applying the slurry in the form of a layer (sheet), drying the slurry, and freely pressing the slurry. If necessary, the binder may be removed by heating. A thickness of the solid electrolyte layer can be easily adjusted by adjusting a coating amount or the like of the slurry.

In addition, instead of wet molding, the solid electrolyte layer may be formed by press-molding the solid electrolyte powder or the like on a surface of a positive electrode, a negative electrode, or the like by a dry method. Alternatively, the solid electrolyte layer may be formed on another base material and transferred onto the surface of the positive electrode, the negative electrode, or the like.

The present solid electrolyte may be mixed with a positive electrode active material or a negative electrode active material to be used as a positive electrode layer or a negative electrode layer. As the positive electrode active material or negative electrode active material used for the positive electrode layer or negative electrode layer, a current collector, a binder, a conductive aid, and the like, known materials according to the related art can be used.

The lithium-ion secondary battery including the present solid electrolyte may include the present solid electrolyte, and includes, for example, the solid electrolyte layer, the positive electrode layer, and the negative electrode layer.

As a material of an outer casing of the lithium-ion secondary battery, known materials according to the related art may also be used. As a shape of the lithium-ion secondary battery, known shapes according to the related art may be used, and examples of the shape of the lithium-ion secondary battery include a coin shape, a sheet shape (film shape), a folded shape, a wound cylindrical shape with a bottom, and a button shape. The shape thereof can be appropriately selected according to the application.

The present solid electrolyte is difficult to ignite even when the ignition source approaches, and has excellent ignition resistance. The present solid electrolyte is highly safe when used in the lithium-ion secondary battery or in various producing processes, with little risk of ignition and spread of fire, or the generation of a toxic SO₂ gas.

### (Method for Producing Sulfide Solid Electrolyte)

A method for producing a sulfide solid electrolyte according to the present embodiment (hereinafter, also referred to as the present production method) is not particularly limited, and for example, a method including at least one of the following (i) to (iii) is preferred. (i) to (iii) are steps of being capable of causing deficiency of the S-S bond or S²⁻ on the surface of the sulfide solid electrolyte, respectively.
(i) A step of exposing the surface of the sulfide solid electrolyte to an organic solvent in which S is soluble.
(ii) A step of oxidizing the surface of the sulfide solid electrolyte.
(iii) A step of exposing the surface of the sulfide solid electrolyte to moisture.

In the present production method, various sulfide solid electrolytes described above can be used as the sulfide solid electrolyte. Further, as the sulfide solid electrolyte, a commercially available sulfide solid electrolyte may be used, or a sulfide solid electrolyte produced from a raw material may be used. As long as an effect of the present invention is not impaired, these sulfide solid electrolytes may be subjected to a known treatment and used. That is, the present production method may appropriately include a step of producing a sulfide solid electrolyte, and a step of subjecting the sulfide solid electrolyte to a known treatment. The known treatment is not particularly limited, and examples thereof include a step of pulverizing the sulfide solid electrolyte so as to have a desired average particle diameter.

In the case where a sulfide solid electrolyte produced from a raw material is used, the raw material and the production method can be appropriately selected from known raw materials and production methods according to a desired composition or the like. An example of the production method is a method in which a raw material including a lithium element, a sulfur element, a phosphorus element, and, if necessary, a halogen element is heated and melted. In such a production method, the raw material may be heat-treated before being heated and melted, and an obtained intermediate may be heated and melted.

Specific methods of heat-treating and heating and melting the raw material are not particularly limited, and example thereof includes a method in which a raw material or an intermediate is put in a heat-resistant container and heated in a heating furnace. The heat-resistant container is not particularly limited, and examples thereof include a heat-resistant container made of carbon, a heat-resistant container containing an oxide such as quartz, quartz glass, borosilicate glass, aluminosilicate glass, alumina, zirconia, and mullite, a heat-resistant container containing a nitride such as silicon nitride and boron nitride, and a heat-resistant container containing a carbide such as silicon carbide. Further, these heat-resistant containers may be a container in which a bulk is formed of the above-described material, or a layer of carbon, an oxide, a nitride, a carbide, or the like is formed.

The heating and melting is preferably performed in an inert atmosphere. Examples of the inert atmosphere include an Ar atmosphere and a nitrogen atmosphere, and a nitrogen atmosphere is more preferable from the viewpoint of production cost. Further, the heating and melting may be performed in a hydrogen sulfide gas atmosphere, a sulfur gas atmosphere, a sulfur dioxide gas atmosphere, or a mixed gas atmosphere of these gases. Furthermore, the heating and melting may be performed in a vacuum-sealed state.

It is preferable that one or more of (i) to (iii) is performed on the sulfide solid electrolyte prepared in this manner.

### (Step of Exposing to Organic Solvent)

First, a method including (i) will be described. In the method including (i), by the step of exposing the surface of the sulfide solid electrolyte to the organic solvent in which S is soluble (hereinafter also simply referred to as the step of exposing to the organic solvent), a sulfur element (S) on the surface of the sulfide solid electrolyte is eluted into the organic solvent, and thus the deficiency of the S-S bond or S²⁻ on the surface can be caused.

In the step of exposing to the organic solvent, as the organic solvent in which S is soluble, for example, an organic solvent having a polar ratio of 0.1 to 4.0 is preferable. When the polar ratio is 0.1 or more, the deficiency of the S-S bond or S²⁻ on the surface of the sulfide solid electrolyte is likely to be caused, which is preferable. The polar ratio is more preferably 0.5 or more, and still more preferably 1.0 or more. On the other hand, when the polar ratio is 4.0 or less, the S-S bond or S²⁻ can be prevented from being excessively eluted, and the decrease in lithium ion conductivity can be prevented to a minimum necessary limit. The polar ratio is more preferably 3.5 or less, and still more preferably 3.0 or less. Further, the improvement in lithium ion conductivity can also be expected by appropriately causing deficiency of the S-S bond or S²⁻. The polar ratio refers to a Rohrschneider polar parameter. Further, it is known that the Rohrschneider polar parameter has a correlation with a value of (δ_{P}² + δ_{H}²)^{0.5} of solubility parameters (δ_{D}, δ_{P}, δ_{H}), and thus the Rohrschneider polar parameter may be determined using the value.

As the organic solvent having the polar ratio as described above, an organic solvent having a polar ratio within the above-mentioned preferred range may be used alone, or a mixed solvent of which a polar ratio is adjusted to be within the above-mentioned preferred range may be used. Specific examples of a preferred organic solvent include toluene, butyl butyrate, a mixed solvent of toluene and heptane (mixing ratio: 1:1), and a mixed solvent of heptane and dibutyl ether (mixing ratio: 1:1), a mixed solvent of toluene and heptane (mixing ratio: 1:1) and a mixed solvent of heptane and dibutyl ether (mixing ratio: 1:1) are preferred. Here, the mixing ratio represents a volume ratio.

By mixing the sulfide solid electrolyte with the organic solvent as described above, the surface of the sulfide solid electrolyte is exposed to the organic solvent in which S is soluble. At this time, the sulfide solid electrolyte is preferably mixed in an amount of 5 mass% or more, more preferably 10 mass% or more, and still more preferably 15 mass% or more, based on a total amount of the organic solvent and the sulfide solid electrolyte. When a concentration of the sulfide solid electrolyte is equal to or higher than the lower limit value, an amount of the sulfide solid electrolyte that can be treated increases, and the treatment can be efficiently performed.

On the other hand, the sulfide solid electrolyte is preferably mixed in an amount of 40 mass% or less, preferably 35 mass% or less, and more preferably 30 mass% or less, based on the total amount of the organic solvent and the sulfide solid electrolyte. When the concentration of the sulfide solid electrolyte is equal to or less than the upper limit value, an amount of the organic solvent with respect to the sulfide solid electrolyte is sufficient, and the both are efficiently brought into contact with each other.

In the step of exposing to the organic solvent, it is preferable that a mixture of the sulfide solid electrolyte and the organic solvent is held for a predetermined period of time, and more preferably is held while being stirred. Stirring can improve the contact efficiency between the organic solvent and the sulfide solid electrolyte.

The holding time is preferably 0.5 hours or more, more preferably 1 hour or more, and still more preferably 1.5 hours or more from the viewpoint of sufficiently eluting S. The holding time is preferably 12 hours or less, more preferably 6 hours or less, and still more preferably 3 hours or less, from the viewpoint of shortening a treating time and efficiently performing the treatment.

By exposing the surface to the organic solvent and then drying the surface to remove the organic solvent, a sulfide solid electrolyte deficient in the S-S bond or S²⁻ on the surface thereof is obtained. Drying conditions can be appropriately adjusted depending on a type of the used organic solvent, a type of the sulfide solid electrolyte, and the like, but as an example, it is preferable to have a dew point of -60°C to -50°C and a temperature of 200°C to 250°C for about 2 hours to 4 hours.

Next, a method including (ii) and a method including (iii) will be described. In the method including (ii) and the method including (iii), it is preferable to perform at least one of (ii) and (iii) after a step of removing sulfur is performed on the sulfide solid electrolyte.

The step of removing sulfur is a step including heat-treating the sulfide solid electrolyte. Since sulfur having an S-S bond on a surface layer can be easily removed by the step of removing sulfur, an amount of S-S bonds or S²⁻ can be reduced more efficiently by the subsequent (ii) or (iii).

In the step of removing sulfur, a temperature of the heating treatment is preferably 200°C or higher, more preferably 250°C or higher, and still more preferably 300°C or higher from the viewpoint of efficiently removing sulfur. The temperature of the heat treatment is preferably 500°C or lower, more preferably 450°C or lower, and still more preferably 400°C or lower, from the viewpoint of preventing a sulfide from being solidified.

In the step of removing sulfur, a time for the heating treatment is preferably 0.5 hours or more, more preferably 1 hour or more, and still more preferably 1.5 hours or more, from the viewpoint of sufficiently removing sulfur. The time for the heating treatment is preferably 12 hours or less, more preferably 6 hours or less, and still more preferably 3 hours or less, from the viewpoint of efficiently performing a treatment.

In the step of removing sulfur, the heat treatment is preferably performed in an inert atmosphere. Examples of the inert atmosphere include a nitrogen gas atmosphere and an argon gas atmosphere.

### (Oxidizing Step)

The method including (ii) will be described. In the method including (ii), the step of oxidizing the surface of the sulfide solid electrolyte (hereinafter also simply referred to as an "oxidizing step"), deficiency of the S-S bond or S²⁻ on the surface of the sulfide solid electrolyte can be caused. By oxidizing the surface of the sulfide solid electrolyte, the S-S bond or S²⁻ on the surface become elemental S or SO₂, which is evaporated, and thus it is considered that the amount of S-S bonds or S²⁻ on the surface of the sulfide solid electrolyte decreases.

The oxidizing method is not particularly limited as long as the surface of the sulfide solid electrolyte can be oxidized, but it is preferable, for example, to hold the sulfide solid electrolyte in a dry air atmosphere for a predetermined time, to mix the sulfide solid electrolyte in a similar atmosphere, to hold the sulfide solid electrolyte in an atmosphere in which an oxygen concentration is adjusted, and to mix the sulfide solid electrolyte in a similar atmosphere. Since treatment conditions can be easily adjusted, it is more preferable to hold the sulfide solid electrolyte in an atmosphere in which an oxygen concentration is adjusted for a predetermined period of time. The oxygen concentration is preferably 100 ppm or more, more preferably 500 ppm or more, and still more preferably 1,000 ppm or more. An upper limit of the oxygen concentration is not particularly limited, and may be 10,000 ppm or less or 5,000 ppm or less. Regarding the oxygen concentration, ppm means a volume-based ratio (volume ppm).

When the sulfide solid electrolyte is held for a predetermined period of time in a dry air atmosphere or an atmosphere in which an oxygen concentration is adjusted, it is more preferable that the sulfide solid electrolyte is stirred. Accordingly, the surface of the sulfide solid electrolyte is efficiently oxidized.

The holding time is preferably 0.5 hours or more, more preferably 1 hour or more, and still more preferably 1.5 hours or more from the viewpoint of sufficiently oxidizing the surface of the sulfide solid electrolyte. The holding time is preferably 12 hours or less, more preferably 6 hours or less, and still more preferably 3 hours or less, from the viewpoint of efficiently performing a treatment.

Conditions such as a temperature and a dew point are not particularly limited as long as the surface of the sulfide solid electrolyte can be oxidized. The temperature is preferably, for example, room temperature. Through this step, the sulfide solid electrolyte deficient in S-S bond or S²⁻ on the surface can be obtained.

### (Step of Exposing to Moisture)

The method including (iii) will be described. In the method including (iii), the step of exposing the surface of the sulfide solid electrolyte to the moisture (hereinafter also simply referred to as the step of exposing to the moisture) makes it possible to cause deficiency of the S-S bond or S²⁻ on the surface of the sulfide solid electrolyte. By exposing the surface of the sulfide solid electrolyte to the moisture, the S-S bond or S²⁻ on the surface becomes H₂S and volatilize, and therefore, it is considered that the amount of S-S bonds or S²⁻ on the surface of the sulfide solid electrolyte decreases.

A method for exposing to the moisture is not particularly limited as long as the surface of the sulfide solid electrolyte is exposed to moisture, examples thereof include holding a sulfide solid electrolyte in an atmosphere with a dew point of equal to or higher than a predetermined value for a predetermined period of time, and mixing the sulfide solid electrolyte in a similar atmosphere, and it is preferable to hold a sulfide solid electrolyte in an atmosphere with a dew point of equal to or higher than a predetermined value for a predetermined period of time.

Specifically, in an atmosphere in which the dew point is a predetermined value or higher, the dew point is preferably -50°C or higher, more preferably -40°C or higher, and still more preferably -30°C or higher from the viewpoint of obtaining a sufficient amount of moisture in the atmosphere. The dew point is preferably 0°C or lower, more preferably -10°C or lower, and still more preferably -20°C or lower from the viewpoint of appropriately controlling a treatment amount.

A gas mainly included in the atmosphere is not particularly limited, and, for example, an inert gas such as a nitrogen gas or an argon gas is preferable from the viewpoint of minimizing an influence other than the desired treatment on the sulfide solid electrolyte.

When the sulfide solid electrolyte is held for a predetermined period of time in the atmosphere, it is more preferable that the sulfide solid electrolyte is stirred. Thus, the surface of the sulfide solid electrolyte is efficiently brought into contact with the moisture.

A time of holding the sulfide solid electrolyte in the above atmosphere is preferably 0.5 hours or more, more preferably 1 hour or more, and still more preferably 1.5 hours or more from the viewpoint of sufficiently bringing the surface of the sulfide solid electrolyte into contact with the moisture. The holding time is preferably 12 hours or less, more preferably 6 hours or less, and still more preferably 3 hours or less, from the viewpoint of efficiently performing a treatment.

In addition, conditions such as a temperature are not particularly limited as long as the surface of the sulfide solid electrolyte reacts with the moisture, but a temperature is preferably room temperature, for example. Through this step, the sulfide solid electrolyte deficient in S-S bond or S²⁻ on the surface can be obtained.

According to the method including at least one of (i) to (iii) shown above, the sulfide solid electrolyte deficient in S-S bond or S²⁻ on the surface is obtained, and thus the sulfide solid electrolyte according to the present embodiment is obtained. Each of the above (i) to (iii) may include simultaneously pulverizing the sulfide solid electrolyte. For example, when the sulfide solid electrolyte is held in a predetermined organic solvent or in a predetermined atmosphere, the sulfide solid electrolyte may be pulverized simultaneously with the stirring of the sulfide solid electrolyte.

### EXAMPLE

The present invention will be specifically described below with reference to Examples, but the present invention is not limited thereto. Examples 1-2 to 1-4, 2-1 to 2-4, and 3-2 to 3-7 are working examples, and Examples 1-1, 3-1, and 3-8 are comparative examples.

In each test example, each evaluation was performed by the following method.

### (Specific Surface Area)

A sulfide solid electrolyte powder was measured by a multipoint krypton adsorption BET method using a specific surface area and pore distribution measuring device (pore distribution measuring device ASAP-2020, manufactured by Micromeritics Instrument Corporation) to determine a specific surface area. The sulfide solid electrolyte powder does not come into contact with the atmosphere from sampling to measurement.

Specifically, as a pretreatment, pressure was reduced at room temperature for 12 hours or more. A sample weight was 0.15 g, and at an analysis temperature of -196°C, measurements were performed at five or more points in a relative pressure (P/P₀) range of 0.1 to 0.25, and a BET plot was created. The specific surface area was calculated from the obtained plot.

### (Average Particle Diameter)

The average particle diameter refers to a median diameter (D50) determined from a chart of a volume-based particle size distribution obtained by measuring a particle size distribution using a laser diffraction particle size distribution analyzer MT 3300 EXII manufactured by Microtrac.

### (Lithium Ion Conductivity)

The sulfide solid electrolyte powder to be measured was formed into a compacted powder body under pressure of 380 MPa, the compacted powder body was used as a measurement sample, and the lithium ion conductivity was measured by using an AC impedance measuring device (potentiostat/galvanostat VSP, manufactured by Bio-Logic Sciences Instruments).

The measurement conditions were as follows: a measurement frequency of 100 Hz to 1 MHz, a measurement voltage of 100 mV, and a measurement temperature of 25°C.

### (S-S bond)

The presence or absence of the S-S bond was evaluated by the following method (1). Additionally, an example of evaluation conditions when the evaluation is performed using XPS is shown in (2).

### (1) Method according to Raman Spectroscopy

The presence of the S-S bond on the surface of the sulfide solid electrolyte was determined by performing Raman spectrum measurement (device name: LabRAM HR Evolution manufactured by HORIBA, Ltd.) and having a peak at one or more of Raman shifts of 140 cm⁻¹ to 170 cm⁻¹, 205 cm⁻¹ to 235 cm⁻¹, and 460 cm⁻¹ to 490 cm⁻¹.

### (2) Method Using XPS

The presence of the S-S bond on the surface of the sulfide solid electrolyte can be determined by performing, under the following conditions, an XPS analysis by a wide scan analysis using a photoelectron spectrometer (ESCA 5500, manufactured by ULVAC-PHI, INCORPORATED) using a transfer vessel, and analyzing a depth of 5 nm. Specifically, it can be determined by having a peak observed at a position of 163.5 ± 0.5 eV

(Conditions) pass energy: 93.9 eV, step energy: 0.8 eV, analysis area: 800 µm in diameter, detection angle: 45° with respect to sample surface, X-ray source: Al ray, monochrome 14 kV, 300 W, sputtering type: C₆₀ ion, and sputtering rate: 0.74 nm/min (in terms of thermal oxide film SiO₂)

### (Elution Amount of S)

After the sulfide solid electrolyte powder is mixed with a solvent and a mixture is held while being stirred, a supernatant liquid was collected and filtered through a 0.45 µm membrane filtration filter (manufactured by Merck Millipore) to remove a solid content. An obtained filtrate was subjected to the ICP emission spectrometry (apparatus: model number PS3520UVDDII, manufactured by Hitachi High-Tech Science Corporation), and an S content (mass ppm) in the filtrate was measured, which was defined as an "elution amount of S."

### (S₅ₙₘ/S₁₀₀ₙₘ and Ha₅ₙₘ/Ha₁₀₀ₙₘ)

The measurement was performed by the X-ray photoelectron spectroscopy under the following conditions to determine S₅ₙₘ/S₁₀₀ₙₘ and Ha₅ₙₘ/Ha₁₀₀ₙₘ. In Test Example 1, since a halogen element included in the sample is only Cl, Ha₅ₙₘ/Ha₁₀₀ₙₘ is set to Cl₅ₙₘ/Cl₁₀₀ₙₘ. Specifically, the sulfide solid electrolyte was subjected to an XPS analysis by a wide scan analysis using a photoelectron spectrometer (ESCA 5500, manufactured by ULVAC-PHI, INCORPORATED) using a transfer vessel to determine an elemental ratio at depths of 5 nm and 100 nm. Conditions were as follows.

Pass energy: 93.9 eV, step energy: 0.8 eV, analysis area: 800 µm in diameter, detection angle: 45° with respect to sample surface, X-ray source: Al ray, monochrome 14 kV, 300 W, sputtering type: C₆₀ ion, and sputtering rate: 0.74 nm/min (in terms of thermal oxide film SiO₂)

### (Ignition Test)

In a dry air atmosphere, an ignition test was performed by the following test method, and evaluated according to the following evaluation criteria.

### (test method)

The following 1 to 7 were performed at a test location where a temperature was 20°C, a dew point was -30°C, under atmospheric pressure, three sides were covered, and a wind speed was 0.05 m/s or less when the wind speed was measured with a hot wire anemometer.
1. 3 cm³ of sulfide solid electrolyte was deposited in a hemispherical shape on an inorganic heat-insulating plate (FIBREXCEL BOARD 1300H manufactured by IMT CO.,LTD.) having a thickness of 10 mm.
2. A length of a diffusion flame of a gas burner was adjusted to 70 mm in a state in which the diffusion flame faces upward.
3. The flame and the sulfide solid electrolyte were brought into contact such that a contact area was 1 cm² to 2 cm² and a contact angle was about 30°.
4. The flame is removed 10 seconds after the flame was brought into contact with the sulfide solid electrolyte.
5. A time from when the flame was brought into contact with the sulfide solid electrolyte until the sulfide solid electrolyte ignited was measured, and whether the sulfide solid electrolyte continued to burn was observed. A case in which no ignition occurred after 10 seconds of the contact was evaluated as a "non-ignition."
6. 1 to 5 were repeated five times.
7. Among measured times until the ignition occurred when the sulfide solid electrolyte continued to burn, a shortest time was defined as an ignition time.

### (Evaluation Criteria)

A: Even after 10 seconds of the contact with the flame, the sulfide solid electrolyte did not ignite, and the sulfide solid electrolyte was "non-ignitable."
B: The ignition time was 5 seconds or more.
C: The ignition time was less than 5 seconds.

### [Test Example 1]

### (Production Example 1)

Raw material powders of Li₂S, P₂S₅, and LiCl were mixed in a molar ratio of 1.85:0.475:1.6. These raw material powders were placed in a heat-resistant container, placed in a 30 g test furnace, and heat-treated by being held for 0.5 hours under conditions of pressure of 1 atmosphere and a temperature of 300°C (temperature rising speed of 5°C/min) in a nitrogen gas atmosphere with a dew point of -50°C to obtain an intermediate.

The obtained intermediate was placed in a heat-resistant container and heated and melted in an atmosphere with a dew point of -60°C under conditions of pressure of 1 atmosphere and a temperature of 730°C for 0.5 hours.

Thereafter, cooling was performed at a cooling rate of 10°C/sec to 1,000°C/sec to obtain Li_{5.6}PS_{4.6}Cl_{1.7} as a sulfide solid electrolyte including an argyrodite crystal having a crystal phase proportion of 90 mass% or more. The obtained sulfide solid electrolyte was pulverized with a mixer, a small amount of toluene was added as a pulverization aid, and dry pulverization was performed using a planetary ball mill. The obtained powder was crushed and passed through a mesh to obtain a sulfide solid electrolyte powder A (powder A) having an average particle diameter of 1.5 µm.

The crystal phase was identified by XRD measurement (device name: SmartLab manufactured by Rigaku Corporation). As a result of the XRD measurement, the crystal phase was a monophase of the argyrodite crystal.

Samples in Examples 1-1 to 1-4 were prepared using the powder A obtained in Production Example 1, and evaluated. Specifically, the presence or absence of S-S bond on a sample surface, S₅ₙₘ/S₁₀₀ₙₘ, Cl₅ₙₘ/Cl₁₀₀ₙₘ, and ignitability were evaluated. Results in Test Example 1 are shown in Table 1.

### (Example 1-1)

The powder A was used as a sample as it was.

### (Example 1-2)

As a solvent A, a mixed solvent of toluene and heptane (mixing ratio 1:1, volume ratio, moisture concentration less than 20 volume ppm) was used. The powder A was mixed with the solvent A and held for 6 hours while being stirred. At this time, the powder A was mixed in an amount of 10 mass% of a total amount of the solvent A and the powder A.

Thereafter, a sample was prepared by drying the power A for 2 hours at a dew point of -50°C, 200°C, and an oxygen concentration of less than 5 ppm by volume.

### (Example 1-3)

The powder A was heat-treated under a condition of 350°C for 2 hours in an inert atmosphere as the step of removing sulfur. Thereafter, a temperature was lowered to room temperature and the powder A was held with stirring for 6 hours under a dry air atmosphere with a dew point of -50 ± 5°C. The obtained powder was crushed and passed through a mesh, it was found that the average particle diameter did not change from 1.5 µm, and this was used as a sample.

### (Example 1-4)

The powder A was heat-treated under a condition of 350°C for 2 hours in an inert atmosphere as the step of removing sulfur. Thereafter, the temperature was lowered to room temperature and the powder A was held with stirring for 6 hours under a nitrogen gas atmosphere with a dew point of -35 ± 5°C. The obtained powder was crushed and passed through a mesh, it was found that the average particle diameter did not change from 1.5 µm, and this was used as a sample.

**[Table 1]**

| | S-S bond | S₅ₙₘ/S₁₀₀ₙₘ | Cl₅ₙₘ/Cl₁₀₀ₙₘ | Ignition test |
|---|---|---|---|---|
| Example 1-1 | Presence | 0.7 | 1.0 | C |
| Example 1-2 | None | 0.4 | 1.2 | A |
| Example 1-3 | None | 0.5 | 0.9 | B |
| Example 1-4 | None | 0.2 | 1.1 | A |

From Table 1, in Example 1-1 in which the powder A was directly used as the sample, the ignition time in the ignition test was less than 5 seconds. On the other hand, in Example 1-2 in which the step of further exposing the powder A to the organic solvent was performed, Example 1-3 in which the oxidizing step was performed, and Example 1-4 in which the step of exposing the powder A to the moisture was performed, a sulfide solid electrolyte which had the ignition time of 5 seconds or more or was "non-ignitable" and had excellent ignition resistance was obtained.

### [Test Example 2]

Samples were prepared as in Examples 2-1 to 2-4, and various evaluations were performed. Specifically, each sample was evaluated for the presence or absence of S-S bond on the surface, S₅ₙₘ/S₁₀₀ₙₘ, Ha₅ₙₘ/Ha₁₀₀ₙₘ, the specific surface area, ignitability, and the lithium ion conductivity. Results in Test Example 2 are shown in Table 2.

### (Example 2-1)

The same sample as in Example 1-2 was used.

### (Example 2-2)

An amorphous sulfide solid electrolyte including Li, P, S, and Cl was produced in the same manner as Production Example 1, except that the mixing ratio of the raw material powders was changed such that the composition before the pulverization using the mixer was as shown in Table 2, and the cooling rate after the heating and melting was increased. This was pulverized in the same manner as in Production Example 1 to obtain a sulfide solid electrolyte powder having an average particle diameter of 1.5 µm. A sample was prepared by treating the obtained powder with the solvent A and drying the power in the same manner as in Example 1-2.

### (Example 2-3)

A sulfide solid electrolyte including an argyrodite crystal was prepared in the same manner as in Production Example 1 except that the mixing ratio of the raw material powders was changed such that the composition before the pulverization using the mixer was as shown in Table 2. This was pulverized in the same manner as in Production Example 1 to obtain a sulfide solid electrolyte powder having an average particle diameter of 1.5 µm. A sample was prepared by treating and drying the obtained powder in the same manner as in Example 1-2 except that a solvent B was used. Here, as the solvent B, isopropyl alcohol was used alone.

### (Example 2-4)

A sulfide solid electrolyte including an argyrodite crystal was prepared in the same manner as in Production Example 1 except that the mixing ratio of the raw material powders was changed such that the composition before the pulverization using the mixer was as shown in Table 2. In the raw material powder, a LiBr powder was used as a Br source. The obtained sulfide solid electrolyte was pulverized in the same manner as in Production Example 1 to obtain a sulfide solid electrolyte powder having an average particle diameter of 1.5 µm. A sample was prepared by treating the obtained powder with the solvent A and drying the power in the same manner as in Example 1-2.

**[Table 2]**

| | S-S bond | Solvent | S₅ₙₘ/S₁₀₀ₙₘ | Ha₅ₙₘ/Ha₁₀₀ₙₘ | Ignition test |
|---|---|---|---|---|---|
| Example 2-1 | None | Solvent A | 0.4 | 1.2 | A |
| Example 2-2 | None | Solvent A | 0.5 | 1.2 | B |
| Example 2-3 | None | Solvent B | 0.2 | 1.1 | A |
| Example 2-4 | None | Solvent A | 0.4 | 1.2 | A |

**[Table 2] (continued)**

| | Composition before pulverization | | | | | Specific surface area (m²/g) | Lithium ion conductivity (mS/cm) |
|---|---|---|---|---|---|---|---|
| | Li | P | S | Cl | Br | | |
| Example 2-1 | 5.60 | 1.00 | 4.60 | 1.70 | 0.00 | 5.5 | 3.9 |
| Example 2-2 | 6.00 | 1.00 | 5.00 | 1.00 | 0.00 | 6.6 | 0.7 |
| Example 2-3 | 5.50 | 1.00 | 4.50 | 1.50 | 0.00 | 5.9 | 0.6 |
| Example 2-4 | 5.50 | 1.00 | 4.50 | 0.75 | 0.75 | 6.0 | 5.4 |

In Table 2, a numerical value of each of elements shown in a column of "composition before pulverization" is expressed as a ratio of a content percentage (at%) of each element in the sulfide solid electrolyte before being pulverized by the mixer, with P = 1.00. As shown in Table 2, even when the composition of the sulfide solid electrolyte was different from Test Example 1 or when the sulfide solid electrolyte was amorphous, a sulfide solid electrolyte having excellent ignition resistance was obtained through the step of exposing the sulfide solid electrolyte to the organic solvent.

### [Test Example 3]

### (Production Example 2)

A sulfide solid electrolyte (Li_{5.6}PS_{4.6}Cl_{1.7}) including the argyrodite crystal was produced in the same manner as in Production Example 1, and pulverized into a powder using the mixer. Thereafter, the obtained powder was passed through a mesh to obtain a sulfide solid electrolyte powder B (powder B) having an average particle diameter of 5 µm.

Samples in Examples 3-1 to 3-8 were prepared using the powder B obtained in Production Example 2, and evaluated. Specifically, the presence or absence of the S-S bond on the surface of the sample, an amount of S eluted into each solvent after the powder B was mixed and held while being stirred, and a change in lithium ion conductivity of the sulfide solid electrolyte before and after immersion in the solvent were evaluated. The change in lithium ion conductivity was evaluated by calculating a rate of change using the following formula. Results in Test Example 3 are shown in Table 3. In Table 3, a mixing ratio in the solvent is represented by a volume ratio.

Change in conductivity = (lithium ion conductivity of sample obtained in each example)/(lithium ion conductivity before mixing powder B with respective one of solvents A to G in each example)

### (Example 3-1)

The powder B was directly used as a sample.

### (Examples 3-2 to 3-8)

Each sample was prepared by treating and drying the power B in the same manner as in Example 1-2 except that the solvents A to G (moisture concentration less than 50 volume ppm) shown in Table 3 were used, respectively.

**[Table 3]**

| | Sample | S-S bond | Solvent type 1 | Solvent type 2 |
|---|---|---|---|---|
| Example 3-1 | Powder B | Presence | - | - |
| Example 3-2 | Powder B + solvent A | None | Toluene | Heptane |
| Example 3-3 | Powder B + solvent B | None | Isopropyl alcohol | None |
| Example 3-4 | Powder B + solvent C | None | Toluene | None |
| Example 3-5 | Powder B + solvent D | None | Butyl butyrate | None |
| Example 3-6 | Powder B + solvent E | None | Butyl butyrate | Isopropyl alcohol |
| Example 3-7 | Powder B + solvent F | None | Heptane | Dibutyl ether |
| Example 3-8 | Powder B + solvent G | Presence | Heptane | None |

**[Table 3] (continued)**

| | Mixing ratio | Polar ratio | Elution amount of S (ppm) | Change in conductivity | _{S5nm/S100nm} |
|---|---|---|---|---|---|
| Example 3-1 | - | - | - | - | 0.7 |
| Example 3-2 | 1:1 | 1.2 | 90 | 1.2 | 0.4 |
| Example 3-3 | 1:0 | 3.9 | 680 | 0.6 | 0.2 |
| Example 3-4 | 1:0 | 2.3 | 120 | 1.1 | 0.4 |
| Example 3-5 | 1:0 | 2.5 | 210 | 1.1 | 0.4 |
| Example 3-6 | 1:1 | 3.2 | 480 | 0.7 | 0.2 |
| Example 3-7 | 1:1 | 1.0 | 110 | 1.1 | 0.4 |
| Example 3-8 | 1:0 | 0.0 | < 10 ppm | 1.0 | 0.7 |

From Table 3, it was found that an elution amount of S tends to change depending on the polar ratio of the solvent in which the sulfide solid electrolyte was immersed, and by treating the sulfide solid electrolyte with a solvent having an appropriately high polar ratio, deficiency of sulfur on the surface can be appropriately caused. Further, it is considered that when deficiency of sulfur is appropriately caused from the surface by the immersion, the sulfide solid electrolyte having excellent ignition resistance can be obtained.

Although the present invention has been described in detail with reference to specific embodiments, it is apparent to those skilled in the art that various changes and modifications can be made without departing from the spirit and scope of the present invention. The present application is based on a Japanese Patent Application (No. 2021-162229) filed on September 30, 2021, the contents of which are incorporated herein by reference.

## Claims

1. A sulfide solid electrolyte that has an ignition time of 5 seconds or more or is non-ignitable when an ignition test is performed using the following test method in a dry air atmosphere,
(test method)
the following 1 to 7 are performed at a test location where a temperature is 20°C ± 5°C, a dew point is -30°C, under atmospheric pressure, and a wind speed is 0.05 m/s or less when the wind speed is measured with a hot wire anemometer,
1. a sulfide solid electrolyte of about 3 cm³ is placed on an inorganic heat-insulating plate having a thickness of 10 mm or more,
2. a length of a diffusion flame of a gas burner is adjusted to 70 mm in a state in which the diffusion flame faces upward,
3. the flame and the sulfide solid electrolyte are brought into contact such that a contact area is 1 cm² to 2 cm² and a contact angle is about 30°,
4. the flame is removed 10 seconds after the flame is brought into contact with the sulfide solid electrolyte,
5. a time from when the flame is brought into contact with the sulfide solid electrolyte until the sulfide solid electrolyte ignites is measured, and whether the sulfide solid electrolyte continues to burn is observed, and a case in which no ignition occurs after 10 seconds of the contact is evaluated as a non-ignition,
6. 1 to 5 are repeated five times, and
7. among measured times until the ignition occurs when the sulfide solid electrolyte continues to burn, a shortest time is defined as an ignition time.

2. The sulfide solid electrolyte according to claim 1, having a value of S₅ₙₘ/S₁₀₀ₙₘ of 0.6 or less when S₅ₙₘ is an elemental ratio of sulfur (S) at a depth of 5 nm from a surface and S₁₀₀ₙₘ is an elemental ratio of sulfur (S) at a depth of 100 nm from the surface, as measured by X-ray photoelectron spectroscopy.

3. A sulfide solid electrolyte comprising:
Li, P and S, wherein
the sulfide solid electrolyte has a value of S₅ₙₘ/S₁₀₀ₙₘ of 0.6 or less when S₅ₙₘ is an elemental ratio of sulfur (S) at a depth of 5 nm from a surface and S₁₀₀ₙₘ is an elemental ratio of sulfur (S) at a depth of 100 nm from the surface, as measured by X-ray photoelectron spectroscopy.

4. The sulfide solid electrolyte according to any one of claims 1 to 3, comprising:
Li, P, S, and Ha, wherein
the Ha is at least one element selected from halogen elements.

5. The sulfide solid electrolyte according to claim 4, having a value of Ha₅ₙₘ/Ha₁₀₀ₙₘ of greater than 0.9 when Ha₅ₙₘ is an elemental ratio of the Ha at the depth of 5 nm from a surface and Ha₁₀₀ₙₘ is an elemental ratio of the Ha at the depth of 100 nm from the surface, as measured by the X-ray photoelectron spectroscopy.

6. The sulfide solid electrolyte according to any one of claims 1 to 5, having a specific surface area of 3 m²/g or more.

7. The sulfide solid electrolyte according to any one of claims 1 to 6, further comprising:
a crystal phase.

8. The sulfide solid electrolyte according to any one of claims 1 to 7, further comprising:
an argyrodite crystal.

9. A method for producing the sulfide solid electrolyte according to any one of claims 1 to 8, the method comprising:
exposing a surface of the sulfide solid electrolyte to an organic solvent in which S is soluble.

10. The method for producing the sulfide solid electrolyte according to claim 9, wherein
the organic solvent has a polar ratio of 0.1 to 4.0.

11. A method for producing the sulfide solid electrolyte according to any one of claims 1 to 8, the method comprising:
oxidizing a surface of the sulfide solid electrolyte.

12. A method for producing the sulfide solid electrolyte according to any one of claims 1 to 8, the method comprising:
exposing a surface of the sulfide solid electrolyte to moisture.

13. A solid electrolyte layer comprising:
the sulfide solid electrolyte according to any one of claims 1 to 8.

14. A lithium-ion secondary battery comprising:
the sulfide solid electrolyte according to any one of claims 1 to 8.
